# EUROPÄISCHE PATENTSCHRIFT

(11) **EP 3 610 167 B1**
(45) Veröffentlichungstag und Bekanntmachung des Hinweises auf die Patenterteilung: **21.04.2021**
(21) Anmeldenummer: 18711036.6
(22) Anmeldetag: 05.03.2018
(51) Int. Cl.: F16D 21/06

(54) **KUPPLUNGSANORDNUNG, DOPPELKUPPLUNGSGETRIEBEANORDNUNG SOWIE KRAFTFAHRZEUG**
CLUTCH ARRANGEMENT, DUAL-CLUTCH TRANSMISSION ARRANGEMENT AND MOTOR VEHICLE
SYSTÈME D'EMBRAYAGE, SYSTÈME DE BOÎTE DE VITESSES À DOUBLE EMBRAYAGE ET VÉHICULE À MOTEUR

(30) Priorität: 11.04.2017 DE 102017206227
(43) Veröffentlichungstag der Anmeldung: 19.02.2020
(73) Patentinhaber: ZF Friedrichshafen AG, 88046 Friedrichshafen (DE)
(72) Erfinder: FRIESS, Johannes, 97513 Michelau im Steigerwald (DE); EBERT, Angelika, 97453 Schonungen (DE); MATSCHAS, Steffen, 97708 Bad Bocklet-Aschach (DE)
(74) Vertreter: ZF Friedrichshafen AG
(86) Internationale Anmeldenummer: PCT/EP2018/055253
(87) Internationale Veröffentlichungsnummer: WO 2018/188854

(56) Entgegenhaltungen:
- DE-A1-102010 051 436
- DE-A1-102011 115 286
- DE-A1-102012 220 892

## Beschreibung

Die Erfindung betrifft eine Kupplungsanordnung zur Anordnung zwischen einer Antriebseinheit und einem Getriebe mit wenigstens einer Lamellenkupplung aufweisend einen Innenlamellenträger, ein Lamellenpaket sowie ein Stützelement zum Abstützen des Lamellenpakets bei der Betätigung der Kupplungsanordnung.

Es ist bekannt, Kupplungen druckbeaufschlagt zu betätigen. Daneben können Lamellenkupplungen auch über Federn, bspw. Membranfedern, als Kraftspeicher oder Hebelelement betätigt werden. Das Lamellenpaket der Lamellenkupplung ist auf der dem Betätigungselement gegenüberliegenden Seite abzustützen. Hierzu sind verschiedene Abstützelemente bekannt. Beispielsweise kann am Außenlamellenträger ein Sprengring angeordnet sein. Alternativ kann der Sprengring, der am Außenlamellenträger befestigt ist, eine Art Endlamelle axial festlegen. Weiter alternativ ist es bekannt, einen mit dem Außenlamellenträger in Verbindung stehenden Gehäuseabschnitt so einzubuchten, dass er als Abstützung des Lamellenpakets fungiert.

Lamellenkupplungen sind aus der DE10 2012 220 892 A1 und der DE10 2011 115 286 A1 bekannt.

Ausgehend hiervon ist es Aufgabe der vorliegenden Erfindung, eine Kupplungsanordnung anzugeben, bei der Verformungen im radial inneren Bereich der Kupplungsanordnung vermieden werden können.

Zur Lösung dieses Problems wird vorgeschlagen, dass der Innenlamellenträger und das Stützelement verbunden sind. Während im Stand der Technik das Stützelement immer mit dem Außenlamellenträger verbunden ist wird nunmehr das Stützelement mit dem Innenlamellenträger verbunden. Dadurch wird der Kupplungsaufbau umgekehrt. Insbesondere wird damit die Anpresskraft, die auf das Lamellenpaket wirkt, letzten Endes auf eine andere Nabe und damit ein komplett anderes Bauteil abgestützt.

Vorzugsweise können der Innenlamellenträger und das Stützelement drehfest verbunden sein. Während ein Sprengring grundsätzlich noch eine gewisse Verdrehung gegenüber dem Lamellenträger erlaubt ist bevorzugt, dass zwischen dem Innenlamellenträger und dem Stützelement keinerlei Verdrehungen vorkommen. Vorteilhafterweise kann der Innenlamellenträger eingangsseitig angeordnet sein. Dadurch ergibt sich insgesamt eine extrem kompakte Bauweise der Kupplungsanordnung.

Vorteilhafterweise können der Innenlamellenträger und das Stützelement mit einer Eingangsnabe drehfest verbunden sein. Grundsätzlich können das Stützelement und der Innenlamellenträger über die Nabe verbunden sein. Das heißt, dass sowohl der Innenlamellenträger als auch das Stützelement separat mit der Eingangsnabe verbunden sind. Sie sind dann nicht nur miteinander verbunden sondern gleichzeitig drehfest verbunden.

Alternativ ist vorgesehen, dass der Innenlamellenträger am Stützelement befestigt ist. Alternativ kann das Stützelement am Innenlamellenträger befestigt sein. Das Stützelement und der Innenlamellenträger verzweigen sich am Lamellenpaket, so dass das Stützelement am Ende des Lamellenpakets angeordnet ist und der Innenlamellenträger radial innerhalb des Lamellenpakets. Weisen die beiden einen gemeinsamen Abschnitt auf, so bedeutet dies letzten Endes, dass der abzweigende Teil am anderen zu befestigen ist. Dabei ist bevorzugt das Stützelement durchgängig und der Innenlamellenträger Anteil an diesem befestigt. Der gemeinsame Abschnitt ist am anderen Ende vorzugsweise an einer Nabe befestigt. Vorzugsweise ist die Befestigung drehfest ausgestaltet.

Vorzugsweise kann der Innenlamellenträger formschlüssig oder stoffschlüssig mit dem Stützelement verbunden sein. Eine stoffschlüssige Verbindung ergibt sich beispielsweise bei einem Festschweißen des Lamellenträgers am Stützelement.

Vorzugsweise kann die Kupplungsanordnung einen Außenlamellenträger aufweisen und das Stützelement teilweise seitlich neben dem Außenlamellenträger verlaufen. Der Außenlamellenträger und das Stützelement verlaufen also abschnittsweise im Wesentlichen parallel. Dabei ist vorteilhafterweise Spiel zwischen dem Stützelement und dem Außenlamellenträger, und zwar derartig viel, dass auch Biegebewegungen des Stützelementes vorkommen können, ohne dass das Stützelement mit dem Außenlamellenträger in Kontakt kommt.

Vorteilhafterweise kann die Kupplungsanordnung einen Außenlamellenträger aufweisen und mit dem Außenlamellenträger ein Tilger verbunden sein. Der Tilger ist bevorzugt ein drehzahladaptiver Tilger. Ist der Innenlamellenträger eingangsseitig angeordnet, so ist der Außenlamellenträger ausgangsseitig. Eine Anordnung des Tilgers an einem Ausgangselement ist dabei dann unproblematisch, wenn die Kupplungsanordnung wenig Schlupfbetrieb aufweist. Vorteilhafterweise ist die Kupplungsanordnung bzw. die Lamellenkupplung als Trennkupplung verwendet. Eine Trennkupplung ist in einem hybridisierten Antriebsstrang eine Kupplung, die zum Abkoppeln der Verbrennungskraftmaschine vom restlichen Antriebsstrang verwendet wird, um bei einem rein elektrischen Fahrbetrieb die durch die Verbrennungskraftmaschine ansonsten auftretenden Schleppmomente gering zu halten.

Vorzugsweise kann das Stützelement ringförmig ausgestaltet sein. Dies bedeutet nicht, dass das Ringelement im Querschnitt völlig gerade sein muss. Als ringförmig werden alle Ausgestaltungen angesehen, bei deinen die Innenkante und die Außenkante kreisförmig sind. Der Querschnitt ist dabei nebensächlich.

Vorteilhafterweise kann das Stützelement in radialer Richtung einen ersten Bereich aufweisen, der eben ausgebildet ist. Neben einer ebenen Ausgestaltung des Ringes sind auch andere Ausgestaltungen möglich. Ohne zusätzliche Angaben dienen die Nummerierungen lediglich der Unterscheidung verschiedener Bereiche. Dabei ist nicht einmal zwingend, dass von den noch folgenden zweiten und dritten Bereichen überhaupt einer vorhanden ist. Beispielsweise kann auch der dritte Bereich realisiert sein, ohne dass es den ersten und zweiten gibt. Die verschiedenen möglicherweise vorhandenen Bereiche lassen sich anderenfalls aber nicht vernünftig differenzieren.

Weiterhin kann das Stützelement in radialer Richtung einen zweiten Bereich aufweisen der eben ausgebildet ist. Dieser ist vorteilhafterweise gegenüber dem ersten Bereich axial versetzt. Eine axiale Versetzung kann beispielsweise durch eine Kröpfung realisiert sein.

Alternativ kann die Kupplungsanordnung einen dritten Bereich aufweisen, der eine Rundung aufweist. Vorteilhafterweise ist der dritte Bereich zwischen dem ersten Bereich und dem zweiten Bereich angeordnet. Wie gerade eben beschrieben ist es auch möglich, dass das Stützelement im Querschnitt komplett gerundet ist und nur den dritten Bereich aufweist. Bevorzugt ist allerdings, dass der Rundungsbereich zwischen zwei ebenen Bereichen angeordnet ist. Alternativ kann der gerundete Bereich, also der dritte Bereich, an einen ebenen Bereich anschließen, ohne dass auf den gerundeten Bereich ein weiterer ebener Bereich folgt.

Vorteilhafterweise kann der erste Bereich auf Höhe des Lamellenpakets der Kupplungsanordnung angeordnet sein. Vorzugsweise kann der dritte Bereich auf Höhe des Innenlamellenträgers angeordnet sein. Vorzugsweise kann der zweite Bereich die Verbindung zu einer Eingangsnabe herstellen.

Der Innenlamellenträger ist bevorzugt in Höhe des dritten Bereichs mit dem Stützelement verbunden. In diesem Abschnitt weist das Stützelement eine große Anlagefläche auf.

Darüber hinaus betrifft die Erfindung eine Kupplungsanordnung zur Anordnung zwischen einer Antriebseinheit und einem Getriebe mit wenigstens einer Lamellenkupplung, wobei die Lamellenkupplung einen Druckraum für die hydraulische Betätigung aufweist, und wobei die Lamellenkupplung als Trennkupplung verwendet ist. Es ist heutzutage bei Lamellenkupplungen ausnahmslos üblich, dass diese bei einer Betätigung über einen Druckraum auch einen Druckausgleichsraum aufweisen. Der Druckausgleichsraum dient der Kompensation der durch das zum Beaufschlagen verwendeten Öl entstehenden Fliehkräfte. Über diese Kräfte entsteht ansonsten teilweise ein undefinierter Betätigungszustand der Kupplung.

Ausgehend hiervon ist es Aufgabe der vorliegenden Erfindung, eine Kupplungsanordnung anzugeben, die dem gegenüber vereinfacht aufgebaut ist.

Zur Lösung dieser Aufgabe wird vorgeschlagen, dass die Lamellenkupplung druckausgleichsraumfrei ausgebildet ist.

Als Kern der Erfindung wird angesehen, dass bei einer Trennkupplung ein zeitweise undefinierter Betätigungszustand der Kupplung unerheblich ist, da dies lediglich ein Schleppmoment des Verbrennungskraftmotors zur Folge hat. Bei Lamellenkupplungen in einem Doppelkupplungsgetriebe könnte dagegen eine undefinierte Betätigung zu einer Zerstörung des Getriebes führen. Die möglicherweise auftretenden Schleppmomente durch einen undefinierten Betätigungszustand einer Trennkupplung werden dagegen überkompensiert durch den vereinfachten Aufbau, dass verringerte Gewicht und die größeren Freiheiten in der Auslegung der Kupplung. Vorteilhafterweise kann die Kupplungsanordnung wenigstens eine weitere Lamellenkupplung aufweisen und die weitere Lamellenkupplung einen Druckraum und einen Druckausgleichsraum aufweisen. Insbesondere kann die Kupplungsanordnung zwei weitere derartige Lamellenkupplungen aufweisen. Beispielsweise kann die Kupplungsanordnung als Dreifachkupplungsanordnung ausgebildet sein und als Kupplungsanordnung für ein hybridisiertes Doppelkupplungsgetriebe verwendet werden. Dann besitzen die Lastschaltkupplungen Druckausgleichsräume und die Trennkupplung eben nicht. Das Weglassen des Druckausgleichsraumes bei einer Trennkupplung ist aber auch dann möglich, wenn die Trennkupplung unabhängig von den anderen Kupplungen als Kupplungsanordnung verwendet wird.

Daneben betrifft die Erfindung eine Hybrid-Doppelkupplungsgetriebeanordnung mit einer Kupplungsanordnung. Die Hybrid-Doppelkupplungsgetriebeanordnung zeichnet sich dadurch aus, dass die Kupplungsanordnung wie beschrieben ausgebildet ist. Die Hybrid-Doppelkupplungsgetriebeanordnung umfasst vorteilhafterweise einen Elektromotor. Dieser kann achsparallel zu den Getriebeeingangswellen angeordnet sein. Insbesondere kann der Elektromotor über eine Kette mit der Kupplungsanordnung verbunden sein. Hierzu kann ein Kettenrad am Gehäuse oder einem Außenlamellenträger der Kupplungsanordnung festgeschweißt sein.

Daneben betrifft die Erfindung ein Kraftfahrzeug mit einer Kupplungsanordnung und/oder einer Doppelkupplungsgetriebeanordnung. Das Kraftfahrzeug zeichnet sich dadurch aus, dass die Kupplungsanordnung und/oder die Doppelkupplungsgetriebeanordnung wie beschrieben ausgebildet ist.

Weitere Vorteile, Merkmale und Einzelheiten ergeben sich aus der folgenden Beschreibung von Ausführungsbeispielen und Figuren. Dabei zeigen:
- Figur 1: ein Kraftfahrzeug, und
- Figur 2: eine Kupplungsanordnung.

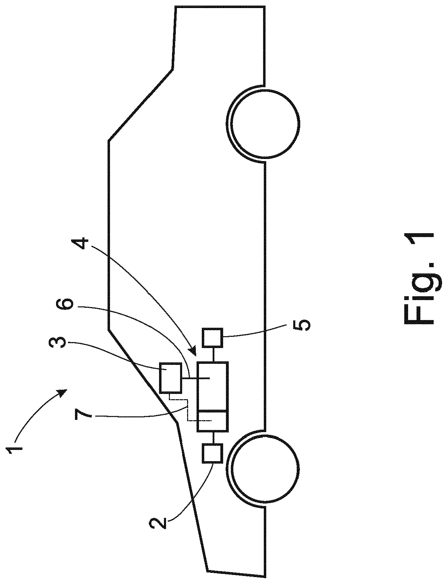

Figur 1 zeigt ein Kraftfahrzeug 1 mit einer ersten Antriebseinheit 2, einer zweiten Antriebseinheit 3, einer Doppelkupplungsgetriebeanordnung 4 und einem Differential 5. Die erste Antriebseinheit umfasst vorzugsweise eine Verbrennungskraftmaschine.
Die zweite Antriebseinheit 3, insbesondere in Form eines Elektromotors ausgeschaltet, kann dabei entweder wie durch die Linie 6 oder die gestrichelt dargestellte Linie 7 angedeutet am Antriebsstrang angreifen. Ein Zusammenwirken mit einer oder beiden Getriebeeingangswellen wird dabei als P2-Anordnung bezeichnet und ein Zusammenwirken mit dem Getriebe selbst als P3-Anordnung. Daneben sind auch eine P1- und eine P4- Anordnung bekannt. Diese stellen die grundsätzlichen Varianten einer parallelen Anordnung von erster Antriebseinheit 2 und zweiter Antriebseinheit 3 dar. Im Folgenden wird eine Kupplungsanordnung für eine P2-Anordnung beschrieben.

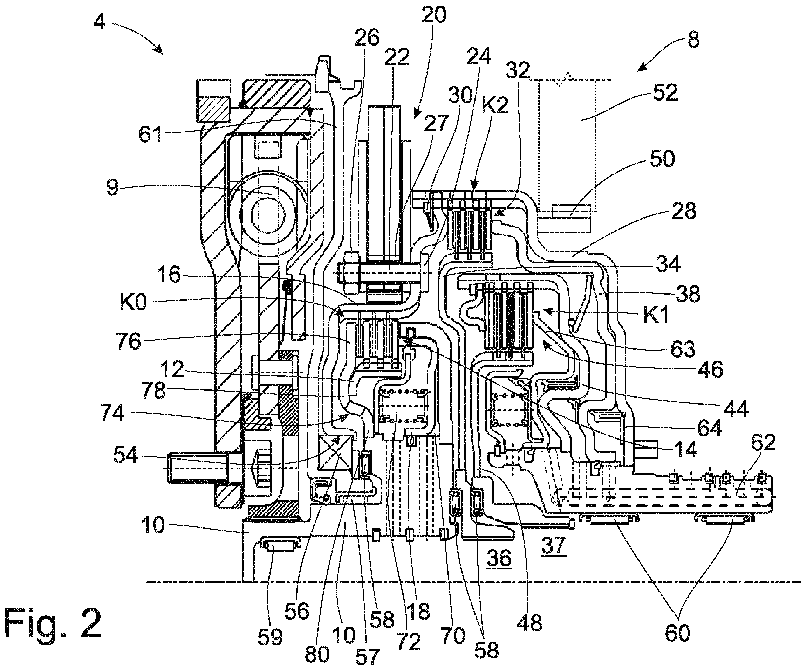

Figur 2 zeigt eine Kupplungsanordnung 8 als Teil der Doppelkupplungsgetriebeanordnung 4. Die Doppelkupplungsgetriebeanordnung 4 ist hybridisiert, weswegen Drehmoment über zwei Wege zum Getriebe gelangen kann. Der erste Weg führt von der ersten Antriebseinheit 2 über einen Torsionsdämpfer zur Dämpfung von Torsiosschwingungen, insbesondere ein Zweimassenschwungrad 9, und eine Nabe 10 zur Trennkupplung K0. Mit der Nabe 10 ist dabei der Eingangslamellenträger der Trennkupplung K0, nämlich der Innenlamellenträger 12, drehfest verbunden. Über das Lamellenpaket 14 kann das Drehmoment auf den Außenlamellenträger 16 übertragen werden. Zur Betätigung der Trennkupplung K0 ist ein Kolben 18 vorhanden.

Ausgangsseitig der Trennkupplung K0, nämlich am Ausgangslamellenträger, in diesem Fall dem Außenlamellenträger 16, ist ein drehzahladaptiver Tilger 20 befestigt. Der drehzahladaptiver Tilger 20 ist mit dem Außenlamellenträger 16 lösbar verbunden. Beispielsweise kann der Tilger 20 mit dem Außenlamellenträger 16 mittels einer Schraube 22 verschraubt sein. Dabei befindet sich der Schraubenkopf 24 innerhalb der Kupplungsanordnung 8, während die Mutter 26 außerhalb angeordnet ist. Zwischen Tilger 20 und Schraube 26 befindet sich noch eine Hülse 27. Diese dient der radialen Beabstandung der Bleche des Tilgers 20.

Mit dem Außenlamellenträger 16 ist der Außenlamellenträger 28 drehfest verbunden. Beispielsweise können der Außenlamellenträger 16 und der Außenlamellenträger 28 formschlüssig verbunden sein. Zur axialen Sicherung des Außenlamellenträgers 16 gegenüber dem Außenlamellenträger 18 kann ein Sprengring 30 verwendet werden. Der Außenlamellenträger 28 ist dabei der Eingangslamellenträger der Kupplung K2, die als Lamellenkupplung ausgebildet ist und eine der beiden Lastschaltkupplungen der Doppelkupplungsgetriebeanordnung 4 darstellt. Ist die Trennkupplung K0 geschlossen, wird das Drehmoment über den Außenlamellenträger 16, den Außenlamellenträger 28 und das Lamellenpaket 32 der Kupplung K2 zum Innenlamellenträger 34 und von dort zur radial inneren Getriebeeingangswelle 36 übertragen.

Zum Verbinden der Außenlamellenträger 16 und 28 kann der Tilger 20 vom Außenlamellenträger 16 abmontiert werden, wodurch die Übergangsstelle freiliegt.

Zum Betätigen weist die Kupplung K2 den Kolben 38 auf. Der Kolben 38 hat in Umfangsrichtung verteilt mehrere Öffnungen 40 in Form von Langlöchern, in die der Außenlamellenträger 28 eingreifen kann. Genauer gesagt greifen mehrere Finger 42 des Außenlamellenträgers 28 in die Öffnungen 40 des Kolbens 38 ein. So bleibt der Kolben 38 gegenüber dem Außenlamellenträger 28 axial verschiebbar.

Radial innerhalb der Kupplung K2 befindet sich die Kupplung K1, die als Anfahrkupplung ausgestaltet ist. Der Außenlamellenträger 28 ist mit dem Außenlamellenträger 44 der Kupplung K1 drehfest verbunden. Insbesondere können die Außenlamellenträger 28 und 44 verschweißt sein. So kann das Drehmoment, das von der ersten Antriebseinheit 2 übertragen wird, auch zur Kupplung K1 gelangen. Der Außenlamellenträger 44 ist dementsprechend der Eingangslamellenträger der Kupplung K1. Über das Lamellenpaket 46 kann das Drehmoment zur radial äußeren Getriebeeingangswelle 37 gelangen.

Die Öffnungen 40 zur Aufnahme der Finger 42 sind bevorzugt am radial äußeren Rand, auch als Topfrand bezeichenbar, des Kolbens 38 angeordnet. Der Kolben 38 hat eine Topfform. Am äußeren Rand des Bodens können die Finger 42 des Außenlamellenträgers 28 eingeführt werden, weswegen sich dort bevorzugt die Öffnungen 40 befinden.

Am Außenlamellenträger 28 kann ein Kettenrad 50 befestigt sein. Das Kettenrad 50 kann beispielsweise am Außenlamellenträger 28 angeschweißt sein. Dieses steht im Eingriff mit einer Kette 52, die den Elektromotor 3 und die Kupplungsanordnung 8 verbindet. Der Elektromotor 3 greift dabei auf der Eingangsseite beider Kupplungen K1 und K2 an, da der Ausganglamellenträger 28 einerseits der Eingangslamellenträger der Kupplung K2 ist und andererseits mit dem Außenlamellenträger 44 der Kupplung K1 drehfest verbunden ist, wobei der Außenlamellenträger 44 der Kupplung K1 ebenfalls der Eingangslamellenträger ist. Dementsprechend zeigt Figur 2 eine P2-Anordnung in Bezug auf die Ankupplung des Elektromotors 3.

Durch die Ausgestaltung und die Verbindung der Außenlamellenträger 16, 28 und 44 bilden diese das Gehäuse der Kupplungsanordnung 8. Die Kupplungsanordnung 8 ist eine Mehrfachkupplungsanordnung, und insbesondere eine Dreifachkupplungsanordnung. Außer den Außenlamellenträgern 16, 28 und 44 gibt es keine weiteren Gehäuseteile. Hierdurch ergibt sich ein bauraumoptimierter Aufbau.

Da der Tilger 20 lösbar mit dem Außenlamellenträger 16 verbunden ist kann die Verbindung der Außenlamellenträger 16 und 28 erfolgen, bevor der Tilger 20 mit der Kupplungsanordnung 8 verbunden wird.

Der beschriebene Aufbau mit den Außenlamellenträgern als Gehäuse erlaubt auch eine vereinfachte Lagerung der Kupplungsanordnung 8. Insbesondere kann die Kupplungsanordnung 8 motorseitig eine einzige radiale Lagerstelle 54 aufweisen. Das Lager 56 kann dabei als Radialkugellager ausgebildet sein. Es kann dabei bevorzugt ein Axial- und Radiallager sein. Es jedoch motorseitig das einzige Lager mit einer radialen Lagerfunktion.

Weiterhin weist die Kupplungsanordnung 8 motorseitig und getriebeseitig jeweils zwei Axiallager 58 auf. Die Axiallager 58 dienen der axialen Lagerung der Innenlamellenträger 12, 34 und 48. Sie sind dementsprechend an den Füßen der Innenlamellenträger 12, 34 und 48 angeordnet. Auf der Getriebeseite weist die Kupplungsanordnung 8 zur radialen Lagerung zwei Nadellager 60 auf, die die Nabe 62 lagern. Die Nabe 62 ist als Ölzuführnabe ausgebildet. Sie umfasst dementsprechend Ölkanäle und Dichtungen. Die Nabe 62 ist drehfest mit dem Außenlamellenträger 44 verbunden. Jedoch erfolgt der Drehmomentfluss nicht wie bei bekannten Doppelkupplungsanordnungen über die Nabe auf die Außenlamellenträger, vielmehr kommt das Drehmoment von den Außenlamellenträger, genauer gesagt vom Außenlamellenträger 28 über den Außenlamellenträger 44 zur Nabe 62.

Der Kolben 63 der Kupplung K1 stützt sich ebenfalls auf der Nabe 62 ab. Auch der Dichtungsträger 64 zum Abdichten des Druckraums der Kupplung K2 ist an der Nabe 62 angeordnet.

Die Trennkupplung K0 nach Figur 2 umfasst einen Druckraum 70 und einen Druckausgleichsraum 72. Dabei ist der Druckausgleichsraum 72 rein exemplarisch dargestellt. In einer Ausgestaltung der Erfindung kann der Druckausgleichsraum 72 entfallen. Dies ist möglich da der Betätigungszustand der Trennkupplung K0 undefiniert sein kann. Eine ungewollte Betätigung der Trennkupplung K0 führt lediglich zu Schleppmomentverlusten, hat aber ansonsten keinerlei Auswirkungen auf den Betrieb des Kraftfahrzeugs.

Während bei der Trennkupplung K0 der Druckausgleichsraum daher entfallen kann ist er bei den Kupplungen K1 und K2 dagegen weiter vorgesehen. Bei den Kupplungen K1 und K2 ist es im Gegensatz zur Trennkupplung K0 entscheidend, in jedem Moment den Betätigungszustand der Kupplungen K1 und K2 zu kennen. Eine ungewollte gleichzeitige Betätigung der Kupplungen K1 und K2 würde zu einer Zerstörung des Getriebes führen. Entgegen einer jahrzehntelangen Praxis kann bei einer Trennkupplung als Lamellenkupplung der Druckausgleichsraum 72 aber entfallen.

Die Trennkupplung K0 weist weiterhin die Besonderheit auf, dass das Stützelement 74 mit dem Innenlamellenträger 12 verbunden ist. Genauer genommen ist in Figur 2 der Innenlamellenträger 12 mit dem Stützelement 74 verbunden, da das Stützelement 74 durchgehend ausgebildet und mit der Nabe 10 verbunden ist, während der Innenlamellenträger am Stützelement 74 befestigt wird. Beispielsweise kann der Innenlamellenträger 12 am Stützelement 74 festgeschweißt sein. Das Stützelement 74 weist dabei einen ersten Bereich 76 auf, der eben ausgebildet und auf Höhe des Lamellenpakets 14 angeordnet ist. Der zweite Bereich 78 ist ebenfalls eben ausgebildet und an der Nabe 10 befestigt. Der dritte Bereich 80 ist zwischen dem ersten Bereich 76 und dem zweiten Bereich 78 angeordnet und befindet sich auf Höhe des Innenlamellenträgers 12. Der dritte Bereich ist gerundet ausgebildet, insbesondere kann er als bauchiger Ring bezeichnet werden.

### Bezugszeichen

- 1: Kraftfahrzeug
- 2: erste Antriebseinheit
- 3: zweite Antriebseinheit
- 4: Doppelkupplungsgetriebeanordnung
- 5: Differential
- 6: Linie
- 7: Linie
- 8: Kupplungsanordnung
- 9: Zweimassenschwungrad
- 10: Nabe
- 12: Innenlamellenträger
- 14: Lamellenpaket
- 16: Außenlamellenträger
- 18: Kolben
- 20: drehzahladaptiver Tilger
- 22: Schraube
- 24: Schraubenkopf
- 26: Mutter
- 27: Hülse
- 28: Außenlamellenträger
- 30: Sprengring
- 32: Lamellenpaket
- 34: Innenlamellenträger
- 36: Getriebeeingangswelle
- 37: Getriebeeingangswelle
- 38: Kolben
- 40: Öffnung
- 42: Finger
- 44: Außenlamellenträger
- 46: Lamellenpaket
- 48: Innenlamellenträger
- 50: Kettenrad
- 52: Kette
- 54: Lagerstelle
- 56: Lager
- 57: Radiallager
- 58: Axiallager
- 59: Radiallager
- 60: Nadellager
- 61: Mitnehmerblech
- 62: Nabe
- 63: Kolben
- 64: Dichtungsträger
- 70: Druckraum
- 72: Druckausgleichsraum
- 74: Stützelement
- 76: erster Bereich
- 78: zweiter Bereich
- 80: dritter Bereich

- K0: Trennkupplung
- K1: Kupplung
- K2: Kupplung

## Patentansprüche

1. Kupplungsanordnung (4) zur Anordnung zwischen einer Antriebseinheit (2) und einem Getriebe mit wenigstens einer Lamellenkupplung (K0) aufweisend einen Innenlamellenträger (12), ein Lamellenpaket (14) sowie ein Stützelement (74) zum Abstützen des Lamellenpakets (14) bei der Betätigung der Kupplungsanordnung (4), wobei der Innenlamellenträger (12) und das Stützelement (74) verbunden sind, wobei die Lamellenkupplung (K0) einen Druckraum (70) für die hydraulische Betätigung aufweist, **dadurch gekennzeichnet, dass** die Lamellenkupplung (K0) als Trennkupplung verwendet ist, und dass die Lamellenkupplung (K0) druckausgleichsraumfrei ausgebildet ist.

2. Kupplungsanordnung nach Anspruch 1, **dadurch gekennzeichnet, dass** der Innenlamellenträger (12) eingangsseitig angeordnet ist.

3. Kupplungsanordnung nach Anspruch 1 oder 2, **dadurch gekennzeichnet, dass** der Innenlamellenträger (12) und das Stützelement (74) mit einer Eingangsnabe (10) drehfest verbunden sind.

4. Kupplungsanordnung nach einem der vorangehenden Ansprüche, **dadurch gekennzeichnet, dass** der Innenlamellenträger (12) am Stützelement (74) befestigt ist.

5. Kupplungsanordnung nach Anspruch 4, **dadurch gekennzeichnet, dass** der Innenlamellenträger (12) formschlüssig oder stoffschlüssig mit dem Stützelement (74) verbunden ist.

6. Kupplungsanordnung nach einem der vorangehenden Ansprüche, **dadurch gekennzeichnet, dass** die Kupplungsanordnung (4) einen Außenlamellenträger (16) aufweist und das Stützelement (74) teilweise seitlich neben dem Außenlamellenträger (16) verläuft.

7. Kupplungsanordnung nach einem der vorangehenden Ansprüche, **dadurch gekennzeichnet, dass** die Kupplungsanordnung (4) einen Außenlamellenträger (16) aufweist und mit dem Außenlamellenträger (16) ein Tilger (20) verbunden ist.

8. Kupplungsanordnung nach einem der vorangehenden Ansprüche, **dadurch gekennzeichnet, dass** das Stützelement (74) ringförmig ausgestaltet ist.

9. Kupplungsanordnung nach einem der vorangehenden Ansprüche, **dadurch gekennzeichnet, dass** das Stützelement (74) in radialer Richtung einen ersten Bereich (76) aufweist, der eben ausgebildet ist.

10. Kupplungsanordnung nach Anspruch 9, **dadurch gekennzeichnet, dass** das Stützelement in radialer Richtung einen zweiten Bereich (78) aufweist, der eben ausgebildet ist.

11. Kupplungsanordnung nach Anspruch 9 und 10, **dadurch gekennzeichnet, dass** der zweite Bereich (78) gegenüber dem ersten Bereich (76) axial versetzt ist.

12. Kupplungsanordnung nach einem der Ansprüche 9 bis 11, **dadurch gekennzeichnet, dass** das Stützelement in radialer Richtung einen dritten Bereich (80) aufweist, der eine Rundung aufweist.

13. Kupplungsanordnung nach einem der vorangegangenen Ansprüche, **dadurch gekennzeichnet, dass** die Kupplungsanordnung wenigstens eine weitere Lamellenkupplung (K1, K2) aufweist und die weitere Lamellenkupplung (K1, K2) einen Druckraum und einen Druckausgleichsraum aufweist.

14. Hybrid-Doppelkupplungsgetriebeanordnung (4) mit einer Kupplungsanordnung (8), **dadurch gekennzeichnet, dass** die Kupplungsanordnung (4) nach einem der vorangehenden Ansprüche ausgebildet ist.

15. Kraftfahrzeug (1) mit einer Kupplungsanordnung (8) und/oder einer Doppelkupplungsgetriebeanordnung (4), **dadurch gekennzeichnet, dass** die Kupplungsanordnung nach einem der Ansprüche 1 bis 13 und/oder die Doppelkupplungsgetriebeanordnung nach Anspruch 14 ausgebildet ist.

## Claims

1. Clutch arrangement (4) for arranging between a drive unit (2) and a transmission with at least one multiple disc clutch (K0) having an inner multiple disc carrier (12), a multiple disc assembly (14) and a supporting element (74) for supporting the multiple disc assembly (14) in the case of the actuation of the clutch arrangement (4), the inner multiple disc carrier (12) and the supporting element (74) being connected, the multiple disc clutch (K0) having a pressure space (70) for the hydraulic actuation, **characterized in that** the multiple disc clutch (K0) is used as a separating clutch, and **in that** the multiple disc clutch (K0) is configured without a pressure equalization space.

2. Clutch arrangement according to Claim 1, **characterized in that** the inner multiple disc carrier (12) is arranged on the input side.

3. Clutch arrangement according to Claim 1 or 2, **characterized in that** the inner multiple disc carrier (12) and the supporting element (74) are connected fixedly to an input hub (10) so as to rotate with it.

4. Clutch arrangement according to one of the preceding claims, **characterized in that** the inner multiple disc carrier (12) is fastened to the supporting element (74).

5. Clutch arrangement according to Claim 4, **characterized in that** the inner multiple disc carrier (12) is connected to the supporting element (74) in a positively locking or integrally joined manner.

6. Clutch arrangement according to one of the preceding claims, **characterized in that** the clutch arrangement (4) has an outer multiple disc carrier (16), and the supporting element (74) runs partially laterally next to the outer multiple disc carrier (16).

7. Clutch arrangement according to one of the preceding claims, **characterized in that** the clutch arrangement (4) has an outer multiple disc carrier (16), and an absorber (20) is connected to the outer multiple disc carrier (16) .

8. Clutch arrangement according to one of the preceding claims, **characterized in that** the supporting element (74) is of annular configuration.

9. Clutch arrangement according to one of the preceding claims, **characterized in that**, in the radial direction, the supporting element (74) has a first region (76) which is of planar configuration.

10. Clutch arrangement according to Claim 9, **characterized in that**, in the radial direction, the supporting element has a second region (78) which is of planar configuration.

11. Clutch arrangement according to Claims 9 and 10, **characterized in that** the second region (78) is offset axially with respect to the first region (76).

12. Clutch arrangement according to one of Claims 9 to 11, **characterized in that**, in the radial direction, the supporting element has a third region (80) which has a curvature.

13. Clutch arrangement according to one of the preceding claims, **characterized in that** the clutch arrangement has at least one further multiple disc clutch (K1, K2), and the further multiple disc clutch (K1, K2) has a pressure space and a pressure equalization space.

14. Hybrid double clutch transmission arrangement (4) with a clutch arrangement (8), **characterized in that** the clutch arrangement (4) is configured according to one of the preceding claims.

15. Motor vehicle (1) with a clutch arrangement (8) and/or a double clutch transmission arrangement (4), **characterized in that** the clutch arrangement is configured according to one of Claims 1 to 13 and/or the double clutch transmission arrangement is configured according to Claim 14.

## Revendications

1. Système d'embrayage (4) destiné à être agencé entre une unité d'entraînement (2) et une boîte de vitesses, comprenant au moins un embrayage à disques (K0) présentant un support de disques intérieurs (12), un paquet de disques (14) ainsi qu'un élément de support (74) pour supporter le paquet de disques (14) lors de l'actionnement du système d'embrayage (4), le support de disques intérieurs (12) et l'élément de support (74) étant connectés, l'embrayage à disques (K0) présentant un espace de pression (70) pour l'actionnement hydraulique, **caractérisé en ce que** l'embrayage à disques (K0) est utilisé en tant qu'embrayage de séparation et **en ce que** l'embrayage à disques (K0) est réalisé sans espace de compensation de pression.

2. Système d'embrayage selon la revendication 1, **caractérisé en ce que** le support de disques intérieurs (12) est disposé du côté de l'entrée.

3. Système d'embrayage selon la revendication 1 ou 2, **caractérisé en ce que** le support de disques intérieurs (12) et l'élément de support (74) sont connectés de manière solidaire en rotation à un moyeu d'entrée (10).

4. Système d'embrayage selon l'une quelconque des revendications précédentes, **caractérisé en ce que** le support de disques intérieurs (12) est fixé à l'élément de support (74).

5. Système d'embrayage selon la revendication 4, **caractérisé en ce que** le support de disques intérieurs (12) est connecté par engagement par correspondance de formes ou par liaison de matière à l'élément de support (74).

6. Système d'embrayage selon l'une quelconque des revendications précédentes, **caractérisé en ce que** le système d'embrayage (4) présente un support de disques extérieurs (16) et l'élément de support (74) s'étend en partie latéralement à côté du support de disques extérieurs (16).

7. Système d'embrayage selon l'une quelconque des revendications précédentes, **caractérisé en ce que** le système d'embrayage (4) présente un support de disques extérieurs (16) et un amortisseur (20) est connecté au support de disques extérieurs (16).

8. Système d'embrayage selon l'une quelconque des revendications précédentes, **caractérisé en ce que** l'élément de support (74) est configuré sous forme annulaire.

9. Système d'embrayage selon l'une quelconque des revendications précédentes, **caractérisé en ce que** l'élément de support (74) présente dans la direction radiale une première région (76) qui est réalisée sous forme plane.

10. Système d'embrayage selon la revendication 9, **caractérisé en ce que** l'élément de support présente dans la direction radiale une deuxième région (78) qui est réalisée sous forme plane.

11. Système d'embrayage selon les revendications 9 et 10, **caractérisé en ce que** la deuxième région (78) est décalée axialement par rapport à la première région (76).

12. Système d'embrayage selon l'une quelconque des revendications 9 à 11, **caractérisé en ce que** l'élément de support présente dans la direction radiale une troisième région (80) qui présente un arrondi.

13. Système d'embrayage selon l'une quelconque des revendications précédentes, **caractérisé en ce que** le système d'embrayage présente au moins un embrayage à disques supplémentaire (K1, K2) et l'embrayage à disques supplémentaire (K1, K2) présente un espace de pression et un espace de compensation de pression.

14. Système de boîte de vitesses à double embrayage hybride (4) comprenant un système d'embrayage (8), **caractérisé en ce que** le système d'embrayage (4) est réalisé selon l'une quelconque des revendications précédentes.

15. Véhicule automobile (1) comprenant un système d'embrayage (8) et/ou un système de boîte de vitesses à double embrayage (4), **caractérisé en ce que** le système d'embrayage est réalisé selon l'une quelconque des revendications 1 à 13 et/ou le système de boîte de vitesses à double embrayage est réalisé selon la revendication 14.
